# EUROPEAN PATENT APPLICATION

(11) **EP 4 776 675 A1**
(43) Date of publication of application: **15.07.2026**
(21) Application number: 23951072.0
(22) Date of filing: 04.09.2023
(51) Int. Cl.: H04W 16/18

(54) **METHOD AND DEVICE FOR WIRELESS COMMUNICATION**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); YOU, Xin, Dongguan, Guangdong 523860 (CN); SHI, Cong, Dongguan, Guangdong 523860 (CN)
(74) Representative: Penza, Giancarlo
(86) International application number: PCT/CN2023/116737
(87) International publication number: WO 2025/050241

(57) **Abstract**

The present application provides a method and device for wireless communication. The method comprises: a first device acquires first information, wherein the first information is used for managing models associated with the first device, and the models associated with the first device comprise a first model; and the first device manages the first model on the basis of the first information. According to embodiments of the present application, information (i.e., the first information) used for managing the models associated with the first device is acquired, thereby implementing management of the models, for example, management of parallel processing conflicts of model operation under the condition that the capability of a terminal device is limited.

## Description

### TECHNICAL FIELD

The disclosure relates to the technical field of communications, and more particularly, to a method and device for wireless communication.

### BACKGROUND

In the near future, a large number of models for different functions may be introduced in communication systems. When the large number of models are introduced, some problems may arise. For example, the terminal device may need to perform inference and training processes of multiple models at the same time. In this case, there is no suitable scheme on how to manage the models at present.

### SUMMARY

The disclosure provides a method and device for wireless communication, and various aspects of the disclosure will be described below.

In a first aspect, there is provided a method for wireless communication, including: a first device acquires first information used for managing models associated with the first device, the models associated with the first device including a first model; and the first device manages the first model based on the first information.

In a second aspect, there is provided a method for wireless communication, including: a second device sends first information to a first device, the first information being used for managing models associated with the first device, and the models associated with the first device including a first model.

In a third aspect, there is provided a wireless communication device, which is a first device and includes: an acquiring unit, configured to acquire first information used for managing models associated with the first device, the models associated with the first device including a first model; and a managing unit, configured to manage the first model based on the first information.

In a fourth aspect, there is provided a wireless communication device, which is a second device and includes: a sending unit, configured to send first information to a first device, the first information being used for managing models associated with the first device, and the models associated with the first device including a first model.

In a fifth aspect, there is provided a wireless communication device, including a memory for storing a program, and a processor for invoking the program in the memory to cause the device to perform part or all of operations of the method in the first or second aspect.

In a sixth aspect, there is provided a wireless communication device, including a processor for invoking a program from a memory to cause the device to perform part or all of operations of the method in the first or second aspect.

In a seventh aspect, there is provided a chip including a processor for invoking a program from a memory to cause the chip to perform part or all of operations of the method in the first or second aspect.

In an eighth aspect, there is provided a computer-readable storage medium having stored thereon a program that causes a wireless communication device to perform part or all of operations of the method in the first or second aspect.

In a ninth aspect, there is provided a computer program product, wherein the computer program product includes a non-transitory computer-readable storage medium storing a computer program operable to cause a communication device to perform part or all of operations of the method of the various aspects described above. In some implementations, the computer program product may be a software installation package.

In a tenth aspect, there is provided a computer program that causes a wireless communication device to perform part or all of operations of the method in the first or second aspect.

In the embodiments of the disclosure, by acquiring information (that is, first information) used for managing the models associated with the first device, it is helpful to implement management of the models, such as management of a parallel processing conflict during operation of models when a capability of a terminal device is limited.

### BRIEF DESCRIPTION OF THE DRAWINGS

FIG. 1 is a wireless communication system to which an embodiment of the disclosure is applied.
FIG. 2 is a schematic diagram of a neural network applicable to an embodiment of the disclosure.
FIG. 3 is a schematic diagram of a convolutional neural network applicable to an embodiment of the disclosure.
FIG. 4 is a schematic diagram of an Artificial Intelligence/Machine Learning (AI/ML) air interface model architecture applicable to an embodiment of the disclosure.
FIG. 5 is a schematic flowchart of a method for wireless communication according to an embodiment of the disclosure.
FIG. 6 is a schematic diagram of a wireless communication device according to an embodiment of the disclosure.
FIG. 7 is a schematic diagram of another wireless communication device according to an embodiment of the disclosure.
FIG. 8 is a schematic structural diagram of a communication apparatus according to an embodiment of the disclosure.

### DETAILED DESCRIPTION

Hereinafter, technical solutions in the disclosure will be described with reference to the accompanying drawings.

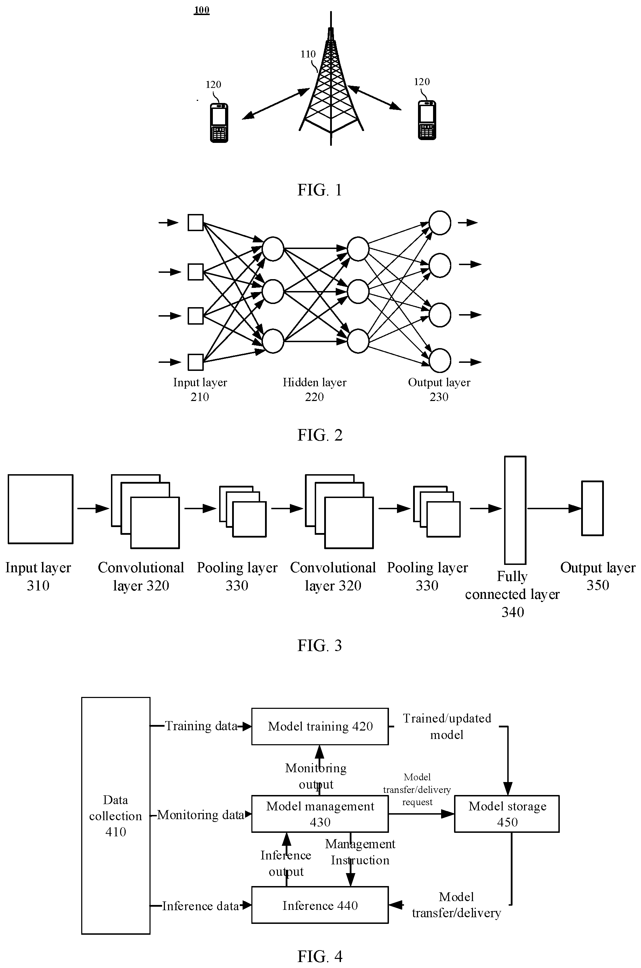

FIG. 1 is a wireless communication system 100 to which an embodiment of the disclosure is applied. The wireless communication system 100 includes a network device 110 and a terminal device 120. The network device 110 may be a device that communicates with the terminal device 120. The network device 110 may provide communication coverage for a particular geographic area and may communicate with terminal devices 120 located within the coverage

FIG. 1 exemplarily illustrates one network device and two terminal devices. Optionally, the wireless communication system 100 may include multiple network devices, and other numbers of terminal devices may be included within the coverage of each network device, which is not limited by the embodiments of the present disclosure.

Optionally, the wireless communication system 100 may also include other network entities, such as network controllers, mobility management entities, etc., which are not limited by the embodiments of the present disclosure.

It is to be understood that the technical solutions of the embodiments of the present disclosure may be applied to various communication systems, such as: a 5th Generation (5G) system or a New Radio (NR) system, a Long Term Evolution (LTE) system, a LTE Frequency Division Duplex (FDD) system, a LTE Time Division Duplex (TDD) system, etc. The technical solutions provided by the present disclosure may also be applied to future communication systems, such as, a 6th generation mobile communication system, a satellite communication system, etc.

The terminal device in the embodiments of the present disclosure may also be referred to as User Equipment (UE), an access terminal, a user unit, a user station, a mobile station, a remote station, a remote terminal, a mobile device, a user terminal, a terminal, a wireless communication device, a user agent or a user device, etc. The terminal device in the embodiments of the present disclosure may be a device that provides voice and/or data connectivity to a user, and may be used for connecting people, objects and machines, such as a handheld device with wireless connection function, a vehicle-mounted device, etc. The terminal device in the embodiments of the present disclosure may be a mobile phone, a Pad, a notebook computer, a palmtop computer, a Mobile Internet Device (MID), a Wearable Device, a Virtual Reality (VR) device, an Augmented Reality (AR) device, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. Optionally, the UE may be used for acting as a base station. For example, the UE may act as a scheduling entity that provides sidelink signal(s) between UEs in Vehicle-to-Everything (V2X), Machine-to-Machine (D2D) or the like. For example, a cellular phone communicates with a car by using the sidelink signal(s). The cellular phone communicates with the device in smart home without relaying communication signal(s) by the base station.

The network device in the embodiment of the disclosure may be a device for communicating with a terminal device, and the network device may also be referred to as an access network device or a radio access network device, for example, the network device may be a base station. The network device in the embodiment of the disclosure may refer to a Radio Access Network (RAN) node (or device), a core network device, a model monitoring and management device, an Operation Administration and Maintenance (OAM) device, or the like that connects the terminal device to a wireless network. The base station may broadly cover or be replaced with following names, such as Node B (NodeB), Evolved NodeB (eNB), next generation NodeB (gNB), relay station, access point, transmitting and receiving point (TRP), transmitting point (TP), Master eNB (MeNB), Secondary eNB (SeNB), Multi-Standard Radio (MSR) node, home base station, network controller, access node, wireless node, Access Point (AP), transmission node, transceiver node, Base Band Unit (BBU), Remote Radio Unit (RRU), Active Antenna Unit (AAU), Remote Radio Head (RRH), Central Unit (CU), Distributed Unit (DU), CU--Control Plane (CU-CP), CU--User Plane (CU-UP), position node, etc. The core network device may broadly cover or be replaced with various names, such as Location Management Function (LMF) network element, Network Slice Selection Function (NSSF), Authentication Server Function (AUSF), Unified Data Management (UDM) function, Access and mobility Management Function (AMF), Session Management Function (SMF), Policy Control Function (PCF), User Plane Function (UPF), Sensing Function (SF), and Network Data Analytics Function (NWDAF) network element.

The base station may be a macro base station, a micro base station, a relay node, a donor node, or the like, or a combination thereof. The base station may also refer to a communication module, modem, or chip arranged within the aforementioned device or apparatus. The base station may also be a mobile switching center, a device that assumes a base station function in device-to-device (D2D), V2X or M2M communication, a network-side device in a 6G network, a device that assumes a base station function in a future communication system, or the like. The base station may support networks of the same or different access technologies. The embodiments of the disclosure do not limit the specific technology and the specific device form adopted by the network device. The base station may be fixed or mobile. For example, a helicopter or unmanned aerial vehicle may be configured to act as a mobile base station, and one or more cells may be moved according to the position of the mobile base station. In other examples, the helicopter or unmanned aerial vehicle may be configured to function as a device that communicates with another base station.

The base station may be fixed or mobile. For example, a helicopter or unmanned aerial vehicle may be configured to act as a mobile base station, and one or more cells may be moved according to the position of the mobile base station. In other examples, the helicopter or unmanned aerial vehicle may be configured to function as a device that communicates with another base station.

In some deployments, the network device in the embodiment of the present disclosure may be a CU or a DU, or the network device may include a CU and a DU. The gNB may also include an AAU.

The network device and the terminal device may be deployed on land, including indoor or outdoor device, hand-held device, or vehicle-mounted device. The network device and the terminal device may also be deployed on the water. The network device and the terminal device may also be deployed in airplanes, in balloons and in satellites in the air. The scenario where the network device and the terminal device are located is not limited in the embodiments of the disclosure.

It is also to be understood that all or part of the functions of the communication device in the present disclosure may also be implemented by software functions running on the hardware or by virtualized functions instantiated on a platform (e.g., a cloud platform).

### Artificial Intelligence (AI)

In recent years, researches on artificial intelligence represented by the neural network have made great achievements in many fields, and the artificial intelligence will also play an important role in people's production and life for a long time to come.

FIG. 2 is a schematic diagram of a neural network applicable to an embodiment of the disclosure. The layers of the neural network shown in FIG. 2 can be divided into three categories according to positions of different layers: input layer 210, hidden layer 220 and output layer 230. In general, the first layer is the input layer 210, the last layer is the output layer 230, and the intermediate layers between the first layer and the last layer are hidden layers 220. A sample may be input to the input layer 210, processed by the hidden layer 220, and a final result is generated at the output layer 230. Herein, each node represents a processing unit, which can be considered to simulate a neuron. Multiple neurons form a layer of neural network, and information transmission and processing between multiple layers construct an overall neural network.

With the continuous development of researches on the neural network, neural network deep learning algorithms have been proposed in recent years, and more hidden layers have been introduced. Feature learning through layer-by-layer training of the multi-hidden-layer neural network greatly improves the learning and processing ability of neural network, and the multi-hidden-layer neural network is widely used in pattern recognition, signal processing, optimization combination, anomaly detection, etc.

Similarly, with the development of deep learning, convolutional neural networks have been further studied. FIG. 3 is a schematic diagram of a convolutional neural network applicable to an embodiment of the disclosure. The basic structure of the convolutional neural network may include an input layer 310, a plurality of convolutional layers 320, a plurality of pooling layers 330, a fully connected layer 340, and an output layer 350. The introduction of the convolutional layer 320 and the pooling layer 330 effectively controls the dramatic increase of network parameters, limits the number of parameters, mines the characteristics of local structures, and improves the robustness of the algorithm.

### Model management

In the related technical discussion, the AI/ML air interface model architecture shown in FIG. 4 was adopted, and model management became an important part of the air interface model architecture.

Referring to FIG. 4, the AI/ML air interface model architecture may include functional modules such as data collection 410, model training 420, model management 430, inference 440, and model storage 450. Herein, the data collection function can collect training data, monitoring data and inference data, and transmit these data to the model training function, the model management function and the inference function respectively. The model training function can store a trained model or updated model in the model storage function. The model storage function may transfer/deliver the model to the inference function to implement model inference.

The functions of the model management shown in FIG. 4 include: supervising the operation of the AI/ML model, or monitoring AI/ML model and AI/ML-based functions. The model management is also responsible for making decisions based on the data received from the data collection function and the inference function to ensure a proper inference operation. The functions of the model management may specifically include a management instruction, a model transfer/delivery request, and a monitoring output.

The management instruction may be used as input to the inference function to fine-tune its operation. Information related to the management instruction may include selection/(de)activation/switching of an AI/ML model or an AI/ML-based function, falling back to a non-AI/ML operation (i.e., not relying on the inference process), etc.

The model transfer/delivery request described above may be used to request a model from the model storage function.

The above monitoring output may monitor an output for (re)training purposes.

### Model transfer/delivery

In some scenarios, such as a scenario in which a model management function requests transfer/delivery of a model, the model may be transmitted between communication devices. For example, the model may be transmitted between communication devices via an air interface. At present, seven manners of transmitting models from a network device to terminal device are specified in communication protocols. The following describes model transfer/delivery manners 1 to 7, wherein the network device may be any one of the following: an access network device; a core network device other than the Location Management Function (LMF); LMF; and a server (for example, an over-the-top (OTT) server, an information management device, or an Operation Administration and Maintenance (OAM) device).

In the model transfer/delivery manner 1, the access network device transmits the model to the terminal device through a Radio Resource Control (RRC) message.

In the model transfer/delivery manner 2, the core network device (except the LMF) transmits the model to the terminal device through Non-Access Stratum (NAS) signaling.

In the model transfer/delivery manner 3, the LMF transmits the model to the terminal device through a Long term evolution Positioning Protocol (LPP) message.

In the model transfer/delivery manner 4, the access network device transmits the model to the terminal device through the user plane.

In the model transfer/delivery manner 5, the core network device (except the LMF) transmits the model to the terminal device through the user plane.

In the model transfer/delivery manner 6, the LMF transmits the model to the terminal device through the user plane, and the message used for transmitting the model is not defined in the 3GPP.

In the model transfer/delivery manner 7, The server transmits the model to the terminal device, and the message used for transmitting the model is not defined in the 3GPP.

In other implementations, if the communication system supports model transfer/delivery, a model identifier, such as a model ID, may be used for lifecycle management of the model.

Current technical discussions have proposed a variety of use cases for applying AI to wireless communications, such as using the AI/machine learning (ML) technology to compress and decompress Channel State Information (CSI) to reduce air interface transmission overhead and improve the accuracy of CSI feedback information; using the AI/ML technology to predict beam information in the time domain/spatial domain to improve the accuracy of beam selection; using the AI/ML technology to predict UE position information and improve the accuracy of position information of a terminal device in Non-line of Sight (NLOS) scenarios.

In the future, new use cases based on the AI technology may be added, such as use cases associated with the mobility. The use cases associated with the mobility may include sub-use cases such as target cell/beam decision, RRM measurement prediction, and failure prediction and repair.

When a large number of models are introduced, it may bring some problems. For example, the current application scenarios of AI/ML models are relatively limited, and the model needs to be designed separately for each sub-use case or sub-scenario, which also means that the terminal device may need to perform inference and training processes of multiple models at the same time. As one example, the terminal device may need to simultaneously perform inference of AI models for both the beam management and the positioning service. As another example, the terminal device may need to simultaneously perform RRM measurement prediction for both the source cell and the target cell based on the AI model. As yet another example, the terminal device may need to simultaneously perform training of the CSI compression model and inference of the positioning model. However, due to limited capabilities of terminal devices, such as computational power, battery capacity and running memory size, the simultaneous operation of multiple models may be limited, for example, a parallel processing conflict of models (also called model parallelism conflict) is likely to occur.

In this case, there is no suitable scheme on how to manage the models at present.

In order to solve the problems above, the embodiments of the disclosure provide a method for wireless communication. By acquiring information (that is, first information) used for managing the models associated with the first device, it is helpful to implement management of the models, such as management of a parallel processing conflict during operation of models when a capability of a terminal device is limited.

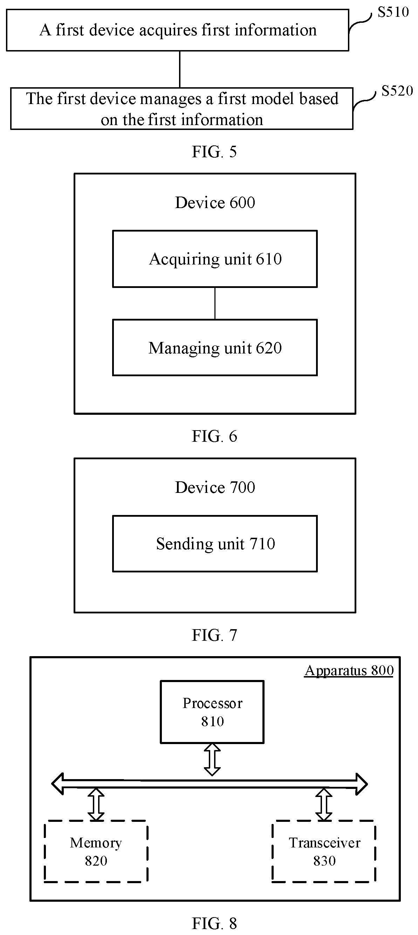

Hereinafter, a method for wireless communication according to an embodiment of the disclosure will be described with reference to FIG. 5. The method shown in FIG. 5 may be applied to the communication scenario shown in FIG. 1 (for example, the first device may be the terminal device 120, and the second device may be the network device 110). The method shown in FIG. 5 can also be applied to a sidelink communication scenario (for example, both the first device and the second device may be terminal devices). The disclosure imposes no limitations in this regard.

The method illustrated in FIG. 5 may include an operation S510 and an operation S520.

In the operation S510, a first device acquires first information.

In the operation S520, the first device manages a first model based on the first information.

The first model may be model(s) associated with the first device, such as the aforementioned AI/ML model, or the model(s) associated with the first device may include the first model. For example, the first model is trained/performs inference using resources of the first device, the first model is a model run by the first device (or the first device performs inference/training of the first model), or the first device performs communication based on the first model.

The first information may be used for managing models associated with the first device. For example, the first information may be used to determine a management policy of the first model. In some embodiments, the first information may include one or more of: second information for indicating a model identifier; third information associated with a model priority; fourth information associated with a pause of model inference/training and/or adjustment of a model inference cycle; fifth information associated with model deactivation; sixth information for indicating a model inference order; seventh information for indicating performance gain information of the model; eighth information for indicating a model required by the first device for inference/training; and ninth information associated with a replacement model.

Hereinafter, the above-described information that may be included in the first information will be described respectively.

### Second information for indicating a model identifier

In some embodiments, the first information may include second information that may be used to indicate a model identifier. The model identifier may be a symbol, code, or name that uniquely identifies a particular model. For example, the model identifier may be a version number of the model, a name of the model, an ID of the model, or the like. The model identifiers can be used for identification and distinguishing purposes when models are used, managed and tracked. In the embodiments of the disclosure, the model required to be managed may be uniquely identified by the model identifier. In some embodiments, the model identifier may also be used to indicate relevant information of the model.

### Third information associated with a model priority

In some embodiments, the first information may include the third information associated with the model priority, and the third information may include, for example, one or more of: information on whether configuration of the model priority is supported; information on whether a priority processing function is enabled; and model priority information.

In some embodiments, the model priority information may be determined based on a plurality of types of information. For example, the model priority information may be determined based on a service type of the model. As an example, in the beam management service, the positioning service, and the mobility service, the priority of the beam management service is the highest, the priority of the positioning service is the second (i.e., the priority of the positioning service is lower than that of the beam management service and higher than that of the mobility service), and the priority of the mobility service is the lowest. As another example, the priority information of the model may be determined based on a current service of the first device. As one example, the model associated with the current service of the first device has the highest priority.

In some embodiments, the model priority information is related to the second information and/or a service type associated with the model. That is, the configuration granularity of the model priority information may be a model granularity or a service type granularity. For example, the model priority information at the model granularity may indicate model priority information of an individual model, wherein model priority information of multiple models may be the same or different. As another example, the model priority information at the service type granularity may indicate model priority information of a plurality of models associated with a same type of service, and the plurality of models associated with the same type of service has the same model priority information.

The model priority information may indicate a priority order of models, and there are a variety of methods in which the model priority information indicates the priority order of the models.

In some embodiments, the model priority information may be one item of a discrete set. Herein, the priority order corresponding to each item in the discrete set may be determined or pre-defined according to the usage requirements, and the disclosure imposes no limitations in this regard. For example, the model priority information may be one item of the set {0, 1, 2, 3}, where 3 represents the highest priority, 2 represents the second priority (i.e., lower than the priority corresponding to 3, and higher than the priority corresponding to 0), and 0 represents the lowest priority. Taking the model priority information associated with the service type mentioned above as an example, the model priority information may be expressed as a discrete set {BM, Pos, Mob}, and elements in the set sequentially indicate that the beam management (BM) service has the highest priority, the positioning (Pos) service has the second priority, and the mobility service (Mob) service has the lowest priority.

In some embodiments, the model priority information may be a continuous value. Herein, the corresponding relationship between the continuous value and the priority order may be determined or pre-defined according to the usage requirements, and the disclosure imposes no limitations in this regard. Taking a case where the higher the continuous value, the higher the priority indicated as an example, if the model priority information of the first model may be 3.4 and the model priority information of the second model may be 2.1, the priority of the first model is higher than the priority of the second model.

In some embodiments, the model priority information may be one item of a pre-defined set having a default order. For example, the model priority information may be one item of {p0, p1, p2}, wherein the correspondence of p0, p1 and p2 to the priority order may be pre-defined, for example, as increasing from front to back in the set, that is, p0 has the lowest priority and p2 has the highest priority.

In some embodiments, the third information may include: information on whether configuration of the model priority is supported; and/or information on whether a priority processing function is enabled. For example, information for the model indicating that configuration of the model priority is not supported may help to ensure that a necessary model of the first device can operate normally. For another example, if the model supports the configuration of the model priority, the model can determine whether to enable the priority processing function according to usage requirements, thereby helping to improve the flexibility of model management.

Whether the model supports configuration of the model priority and/or whether the model enables the priority processing function can be indicated in a variety of ways, such as an explicit indication or an implicit indication. For example, one or more bits may be used for explicitly indicating whether the model supports configuration of the model priority, such as "0" indicating that configuration of the model priority is not supported, "1" indicating that configuration of the model priority is supported; or "1" indicating that configuration of the model priority is not supported, and "0" indicating that configuration of the model priority is supported. For another example, the model indicates, through a bit, whether the priority processing function is enabled, for example, "0" indicates that the priority processing function is not enabled, "1" indicates that the priority processing function is enabled; or "1" indicates that the priority processing function is not enabled, and "0" indicates that the priority processing function is enabled. The way of indicating whether the model supports configuration of the model priority may include, for example, an implicit indication. As one example, if the model priority information is configured, it indicates that the model supports configuration of the model priority, and if the model priority information is not configured, it indicates that the model does not support configuration of the model priority.

Whether the model supports configuration of the model priority and whether the model enables the priority processing function can be indicated separately or in combination. For example, "10" may indicate that the model supports prioritizing but a prioritizing function is not currently enabled, and "11" may indicate that the model supports prioritizing and the prioritizing function is currently enabled. For another example, "1" may indicate that configuration of the model priority is supported and the priority processing function is enabled, and "0" may indicate that configuration of the model priority is not supported and the priority processing function is not enabled.

It is to be noted that the meanings of the above-described bits are given only by way of example, and the disclosure imposes no limitations in this regard.

### Fourth information associated with a pause of model inference/training and/or adjustment of a model inference cycle

In some embodiments, the first information may include fourth information associated with a pause of model inference/training and/or adjustment of a model inference cycle. In other words, the fourth information may be information associated with a model backoff. The model back-off herein may refer to pausing inference/training of the model and/or adjusting the inference cycle of the model. Based on this, the resources of the first device may be allocated by pausing inference/training of one or a part of the models, or adjusting the inference cycle of one or a part of the models, so as to solve the parallelism conflict between multiple models. In other words, the problem of parallelism conflict between multiple models can be solved by model backoff.

In some embodiments, the fourth information may include a maximum number of times, which may be used for indicating a maximum value of a model inference/training backoff number. Herein, the model inference/training backoff number may be a number of times of pausing model inference/training and/or adjusting the model inference cycle.

In some embodiments, the maximum backoff number may be a maximum number of backoffs within a first time period, for example, it may be a maximum of 5 backoffs allowed within 10 s, where the first time period is 10 s and the maximum backoff number is 5. In other embodiments, the maximum backoff number may be a ratio of the model backoff number to a number of model parallelism conflicts, for example, the maximum backoff number is 50%.

In some embodiments, the first model may perform a model backoff if the model inference/training backoff number of the first model is less than the maximum number of times. Taking the maximum backoff number being 50% as an example, if the ratio of the current model backoff number to the number of model parallelism conflicts is 20%, the model backoff can be performed.

In some embodiments, if the model inference/training backoff number of the first model is greater than or equal to the maximum number of times, the first device deactivates the first model to save resources. Taking the maximum backoff number being 50% as an example, if the ratio of the current model backoff number to the model parallelism conflicts is 60%, the model can be deactivated. In other embodiments, if the model inference/training backoff number of the first model is greater than or equal to the maximum number of times, the first device performs inference/training of the first model to avoid performance loss caused by the model's failure to run.

In a case where the model inference/training backoff number is greater than or equal to the maximum number of times, which of the above-described processing (deactivation or execution) is to be performed for the first model may be determined based on information such as an importance degree of the first model, for example a priority, or whether the first model is associated with the current service of the first device.

In some embodiments, the fourth information may include a first duration for indicating a backoff duration of model inference and/or training, to improve the flexibility of model management. Herein, the backoff duration may be a duration during which model inference/training is paused and/or the model inference cycle is adjusted.

For example, the first duration may be a fixed value to facilitate implementation. As an example, the first time period may be 2 s, and if a model parallelism conflict occurs, the inference/training of the first model may be paused for 2 s, or the inference cycle of the model may be adjusted within 2 s.

For another example, the first duration may be associated with a plurality of values, such as a fixed list or sequence, and the value of the first duration may be determined based on the backoff number, or the first duration may be associated with the model inference/training backoff number. As an example, the first duration may be {1 s, 2 s, 4 s}, after the model parallelism conflict occurs for the first time (or the model backoff is performed for the first time, that is, the model backoff number is 1), the model pauses inference/training for 1 s, or the inference cycle of the model is adjusted within 1 s; after the model parallelism conflict occurs for the second time (or the model backoff number is 2), the model pauses inference/training for 2 s, or the inference cycle of the model is adjusted within 2 s; and after the model parallelism conflict occurs for the third time (or the model backoff number is 3), the model pauses inference/training for 4 s, or the inference cycle of the model is adjusted within 4 s.

When the number of model parallelism conflicts is larger, it may indicate that the resources of the first device are tighter. Based on this, the first duration can be positively correlated with the backoff number of the model inference/training, that is, by increasing the duration of model backoff, the model parallelism conflict can be avoided, or the frequency of model parallelism conflicts can be reduced. For example, the first duration may be a sequence with an initial value of 2 s and an increment of 1 s. Then, when the model parallelism conflict occurs for the first time or the model backoff is performed for the first time, the model pauses inference/training for 2 s, or the inference cycle of the model is adjusted within 2 s; when the model parallelism conflict occurs for the second time or the model backoff is performed for the second time, the model pauses inference/training for 3 s, or the inference cycle of the model is adjusted within 3 s; and when the model parallelism conflict occurs for the third time or the model backoff is performed for the third time, the model pauses inference/training for 4 s, or the inference cycle of the model is adjusted within 4 s.

In order to improve the accuracy of model management, the first duration may be positively correlated with the backoff number of the model inference/training in a second time period, so as to eliminate the impact of a model backoff having a longer interval from a current model conflict on the model management policy. For example, the first duration may be positively correlated with the backoff number of model inference/training within 1 minute, i.e., the second time period is 1 minute. That is, if the time interval between two model parallelism conflicts is greater than a certain threshold, such as the second time period, the number of model parallelism conflicts is re-counted, or the previous number of model parallelism conflicts is cleared. If the time interval between the two model parallelism conflicts is less than or equal to the certain threshold, the backoff duration of the model may be determined according to the sequence associated with the first duration, such as an incremental sequence.

As mentioned above, the model backoff may include adjusting the inference cycle of the model. Accordingly, the fourth information may include information about the model inference cycle. For example, the information about the model inference cycle may include a first cycle and/or a second cycle, the first cycle is applied to a model inference process when resources of the first device are sufficient, and the second cycle is applied to a model inference process when the resources of the first device are insufficient, wherein the first cycle is different from the second cycle. The case where the resources of the first device are sufficient herein may refer to, for example, a case where no model parallelism conflict occurs, and the case where the resources of the first device are insufficient may refer to, for example, a case where the model parallelism conflict occurs. That is, when a model parallelism conflict occurs, the inference cycle of the model may be adjusted from the first cycle to the second cycle.

In some embodiments, the fourth information may indicate information of the second cycle in a variety of ways. For example, the fourth information may directly indicate the second cycle, such as indicating that the second cycle is 5 s. As another example, the fourth information may indicate an association relationship between the second cycle and the first cycle, such as indicating a multiple relationship (or referred to as a cycle multiple) between the second cycle and the first cycle. As an example, the fourth information may indicate that a multiple between the second cycle and the first cycle is 2 (i.e., the cycle multiple is 2), and if the first cycle is 2 s, the second cycle is 4 s. For another example, the fourth information may indicate the second cycle by a fixed list or sequence. As an example, the model cycle sequence may be an incremental sequence, such as {2 s, 4 s, 6 s}, and the second cycle is 2 s when the model inference cycle is adjusted for the first time, the second cycle is 4s when the model inference cycle is adjusted for the second time, and the second cycle is 6s when the model inference cycle is adjusted for the third time.

In the embodiment of the disclosure, when a model parallelism conflict occurs, the inference cycle of the model is adjusted, such as increasing the inference cycle of the model (that is, the second cycle is greater than the first cycle), which can reduce the demand of the model for resources per unit time, thereby helping to solve the problem of model parallelism conflict.

The adjusting the inference cycle of the model within the first duration may mean that a duration to which the adjusted inference cycle (such as the second cycle described above) applies is the first duration. Or in other words, the model inference is performed using the second cycle within the first duration, and the model inference is performed using the first cycle after the first duration.

The fourth information may include information related to the fairness of the model, in order to avoid a situation in which the model continues performing backoff and cannot perform inference / be trained.

In some embodiments, the information associated with the fairness of the model may include one or more of: information for indicating an initial value of the model fairness; information for indicating an increment of the model fairness; and information for indicating a termination condition of the model fairness.

The initial value of the model fairness may be, for example, a fixed value or a fixed level. As an example, the initial value of the model fairness may be determined based on the model priority information, for example, the initial value of the model fairness is equal to the model priority. For another example, the initial value of model fairness can be an element at a specific position in a model fairness set, such as the first element. As an example, the model fairness set is {0, 1, 3, 5}, and the initial value of the model fairness is the first element 0 in the model fairness set.

The increment of model fairness is used to indicate an increase amount of the model fairness after each model backoff. Each time a model backoff occurs, the increment of model fairness can be the same or different. For example, each time a model backoff occurs, the increment of the model fairness is 1. For another example, the increments of the model fairness are an increment list or an increment sequence, and for different model backoff numbers, the increments of the model fairness correspond to different elements in the increment list or increment sequence.

In some embodiments, the increment of the model fairness may be an incremental level or a list of incremental levels (which will be described later in conjunction with specific examples and will not be elaborated here).

In some embodiments, the model fairness may be determined based on the initial value of the model fairness and the increment of the model fairness. If the increment of the model fairness is the same every time the model backoff occurs, then the model fairness = initial value of model fairness + increment of model fairness × model backoff number. Taking the initial value of the model fairness being 2.1 and the increment of the model fairness being 1 as an example, if the model backoff number is 1, the model fairness is 3.1, and if the model backoff number is 2, the model fairness is 4.1. Taking the initial value of the model fairness being 2.1 as an example, if the increments of the model fairness are an increment list, such as {1, 2, 3}, when the model backoff number is 1, the model fairness is 3.1 (that is, the increment of the model fairness is the first element 1 in the increment list), and when the model backoff number is 2, the model fairness is 5.1 (that is, the increment of the model fairness is the second element 2 in the increment list).

As mentioned earlier, the increment of the model fairness may be an incremental level or a list of incremental levels. In this case, the fourth information may indicate the fairness of the model each time a model backoff occurs, through the model fairness set and/or the model fairness incremental level (or the list of incremental levels). For example, the model fairness set is {0, 1, 3, 5}, and the initial value of the model fairness is the n-th element in the model fairness set (taking n = 1 as an example). If the increment level of the model fairness increment is m (taking m = 1 as an example), the model fairness is 1 (that is, the (n+m)-th element in the model fairness set) when the model backoff number is 1; and when the model backoff number is 2, the model fairness is 3 (that is, the (n+m+m)-th element in the model fairness set). For another example, the model fairness set is {0, 1, 3, 5}, the initial value of the model fairness is the n-th element in the model fairness set (taking n = 1 as an example), and the list of incremental levels is {1, 0, 2}. Then, when the model backoff number is 1, the model fairness is 1 (that is, the (n+1)-th element in the model fairness set, where 1 is the first element in the list of incremental levels); when the model backoff number is 2, the model fairness is 1 (that is, the (n+1+0)-th element in the model fairness set, where 0 is the second element in the list of incremental levels ); and when the model backoff number is 3, the model fairness is 5 (that is, the (n+1+0 +2)-th element in the model fairness set, where 2 is the third element in the list of incremental levels).

In some embodiments, if the model fairness of the first model satisfies the termination condition of the model fairness, the first device performs inference/training of the first model or deactivates the first model. If the initial value of the model fairness of the first model is 0, the increment of the model fairness is 1 and the termination condition of the model fairness is 4, then when the model fairness is 4, the first device performs inference/training of the first model or deactivates the first model. That is, when the model parallelism collision occurs, the model backoff is performed at most 4 times.

It is to be noted that information such as the number of model parallelism conflicts, the model backoff number, the number of adjustments of the inference cycles and the increment of the model fairness are cleared or reset to initial values every period of time or when a preset condition is reached, so as to avoid the influence of historical information of model parallel conflicts on model management decisions for parallel conflicts of the current model, and thus help to improve the accuracy of model management.

It is to be noted that the fourth information may include one or more of the above-described information, that is, the fourth information may include one or more of: the maximum number of times; the first duration; the information about the model inference cycle ; and the information associated with the fairness of the model.

### Fifth information associated with model deactivation

In some embodiments, the first information may include fifth information associated with model deactivation. The fifth information may include one or more of: information on whether model deactivation is supported; a second duration for indicating a deactivation duration of the model; and a first timer for indicating a moment when the model is deactivated.

In some embodiments, the fifth information may include information on whether model deactivation is supported, which may indicate, for example by one or more bits, the information on whether model deactivation is supported. For example, a "0" may indicate that the model does not support model deactivation, and a "1" may indicate that the model supports model deactivation. Conversely, "1" may indicate that the model does not support model deactivation, and "0" may indicate that the model supports model deactivation. The meanings of the above bits are given by way of example only, and the disclosure imposes no limitations in this regard.

In some embodiments, the fifth information may include a second duration for indicating a deactivation duration of the model. For example, the second duration may be 1 minute. For another example, the second duration may be a fixed list or an incremental sequence. As an example, the second duration may be {1 min, 2 min, 3 min}, and when the first model is deactivated for the first time, the second duration may be 1 min, that is, the deactivation duration of the first model is 1 min; when the first model is deactivated for the third time, the second duration may be 3 minutes, that is, the deactivation duration of the first model is 3 minutes.

If the deactivation duration of the first model reaches the second duration, the first device may reactivate the first model. In some embodiments, the first device makes an activation determination before reactivating the first model. The activation determination mentioned herein may refer to determining whether there is a model parallelism conflict at the current time. If there is currently no model parallelism conflict, the first model may be reactivated. If there is currently a model parallelism conflict, the first model may not be reactivated, or the first model may remain in a deactivated state, so as to avoid invalid activation and exacerbation of the model parallelism conflict. In this case, in order to ensure the performance gain of the first model to the system, the activation determination may be performed again after a certain time interval.

In some embodiments, the fifth information may include a first timer for indicating a moment when the model is deactivated. For example, after the first timer expires, the model is deactivated. The timing duration of the first timer may be determined according to factors such as model type and usage requirements.

### Sixth information for indicating a model inference order

In the process of completing a certain task, the first device may need a plurality of models for serial processing. The serial processing herein may refer to, for example, a processing where a inference result of a first model is used as the input of a second model. Therefore, the management of the models needs to take into account the inference order of the models, that is, the first information may include the sixth information for indicating the model inference order. In other words, the sixth information may be used to indicate an inference order relationship of the plurality of models, for example, the sixth information may indicate that the inference of the first model is performed first, and then the inference of the second model is performed, or the inference of the first model is performed first before the inference of the second model is performed. Herein, the plurality of models, such as the first model and the second model, are models requiring serial processing.

In some embodiments, the inference order of the models may be indicated by one or more bits. For example, 001 may be used to indicate the first model for serial processing, 010 may be used to indicate the second model for serial processing, and 100 may be used to indicate the third model for serial processing.

In some embodiments, the inference order of the models may be indicated by a list of model identifiers. For example, if the list of model identifiers may be {2, 1, 3}, it is indicated that the first model for serial processing is model 2, the second model for serial processing is model 1, and the third model for serial processing is model 3, that is, the inference order of the models is model 2, model 1, and model 3.

### Seventh information for indicating performance gain information of the model

For a model with a small performance gain, pausing inference/training of the model, adjusting the inference cycle of the model or deactivating the model may have little impact on system performance. However, for a model with a large performance gain, pausing the inference/training of the model, adjusting the inference cycle of the model or deactivating the model may have a greater impact on the system performance. Therefore, when managing the models, it is necessary to consider the performance gains of the models to ensure or improve the system performance.

Based on this, the first information may further include the seventh information for indicating a performance gain of the model, that is, the seventh information may be used for indicating a gain in communication performance of communication based on a model as compared to communication not using the model. In some embodiments, the seventh information may indicate the performance gain of the model by an absolute value of the performance gain of the model, a percentage of the performance gain of the model to the performance obtained when the model is not used for communication, or a performance multiple, etc.

In some embodiments, when the models are managed based on the seventh information, if a model parallelism conflict occurs, the model backoff described above may be preferentially performed on the model with a smaller performance gain, such as pausing inference/training of the model and/or adjusting the inference cycle of the model, or deactivating the model with a smaller performance gain. Priority is given to maintaining the operation of the model with a larger performance gain, or priority is given to maintaining inference/training of the model with a larger performance gain.

### Eighth information for indicating a model required by the first device for inference/training

In some embodiments, the first information may include eighth information for indicating model(s) required by the first device for inference/training.

The required model for inference/training may include, for example, a model having high importance, a model requiring completion of training as soon as possible, or a model requiring continuous inference. For example, when the first device performs a handover decision, a model associated with the handover decision is the required model for inference/training, so as to ensure the communication performance of the system.

When performing model management, the first device needs to guarantee the running of the required model for inference/training. For example, if the model required by the first device for inference/training includes the first model, the first device does not deactivate the first model or does not pause inference/training of the first model, and/or the first device does not adjust the inference cycle of the first model. While for non-required models for inference/training, the first device may manage them based on other information.

In some embodiments, the required models for inference/training may be indicated by a list of required model identifiers. For example, the list of required model identifiers may be {1, 3, 7} to indicate that model 1, model 3 and model 7 are models required by the first device for inference/training.

### Ninth information associated with a replacement model

In some embodiments, the first information may include ninth information associated with a replacement model. Herein, the replacement model may be associated with the first model. For example, the replacement model may be a model that has lower capability requirement for the first device, such as occupying less resources, and a model that has function(s) same as the first model. When a model parallelism conflict occurs, replacing the first model with the replacement model (i.e. deactivating the first model and activating the replacement model) helps to solve the problem of model parallelism conflict. The resources mentioned herein may include computing resources, energy consumption resources, running memory resources, and the like.

As a result, when a plurality of models associated with the first device have a parallel processing conflict, the number of models that the first device can process in parallel can be increased by model replacement, thereby helping to solve the problem of model parallelism conflict. For example, the running memory of the first device is 30 M, and if the inference/training of each model needs to occupy 10 M of the running memory, the first device may process three models in parallel. If the model is replaced with a model that requires 5M of running memory for inference/training, the number of models that the first device can process in parallel is increased to 6.

In some embodiments, the ninth information may include one or more of: information on whether usage of the replacement model is supported; model information of the replacement model; an acquisition manner of the replacement model; and a usage timing of the replacement model.

For example, the ninth information may include the information on whether usage of the replacement model is supported. Compared with the original model, the replacement model takes up less resources, but the performance of the replacement model may degrade to a certain extent. Therefore, a part of the models may support usage of the replacement model, but another part of the models may not support usage of the replacement model. In the embodiments of the disclosure, the model management is performed based on the information on whether usage of the replacement model is supported, which is helpful to satisfy the performance requirements of the model.

As another example, the ninth information may include the model information of the replacement model, such as a model identifier.

If the first device or the second device locally includes the replacement model, the first device may perform the model replacement based on the model information of the replacement model, or receive the replacement model from the second device (or the second device transmits the replacement model to the first device), thereby performing the model replacement. The second device herein may be a device that communicates with the first device.

If the first device and/or the second device does not locally include the replacement model, the original model may be processed to obtain the replacement model. Therefore, the ninth information may include acquisition manner of the replacement model, for example, a model compression method such as knowledge distillation and network pruning.

The original model may be processed by the first device to acquire a replacement model, or the second device may process the original model and transmit the acquired replacement model to the first device. The device that processes the original model may be determined based on the resource capabilities of the device, such as processing the original model by a device with sufficient resources.

As another example, the ninth information may include a usage timing of the replacement model. For example, the usage timing of the replacement model may include a moment T1, after a duration T2, or after the expiration of the second timer. That is, the ninth information may include one or more of: the moment T1, the duration T2, and the second timer.

The above-described second information to ninth information may be used alone or in combination with each other. For example, the performance gain of the first model may be taken into account when it is determined whether to deactivate the first model. For another example, when a model conflict occurs and it is necessary to perform a model backoff, it is possible to determine whether to perform a model backoff on a first model according to priorities of a plurality of models, or an inference order of the models.

In the embodiments of the disclosure, the first device manages the model(s) associated with the first device based on the first information, such as deactivating the model, pausing model inference/training, and adjusting the inference cycle of the model, so as to alleviate the contradiction between insufficient resources of the first device and large demand for model resources, and thus facilitate the management of the model(s) associated with the first device.

The first information has been described in detail above, and the configuration method and configuration or transmission opportunity of the first information will be described below.

In some embodiments, acquiring, by the first device, the first information may include one or more of following manners: acquiring the first information that is pre-defined; acquiring the first information that is pre-configured; and acquiring dynamic indication information sent by a second device, wherein the dynamic indication information includes the first information.

For example, the first information may be pre-defined information, or the first information may be carried in the pre-defined information, for example, the first information is information pre-defined a protocol. For example, model priority information, such as model priority information based on service type, may be pre-defined in the protocol.

For another example, the first information may be pre-configuration information, or the first information may be carried in the pre-configuration information, for example, carried in information pre-configured by the network device for the terminal device. For example, the first information may be carried in an RRC message.

For another example, the first information may be information carried in the dynamic indication information sent by the second device. That is, the first device receives the dynamic indication information sent by the second device, and the first information is carried in the information. In the embodiment of the disclosure, the dynamic indication of the first information may enable dynamical adjustment of a model management policy according to service requirement(s) and a status of the terminal device.

In some embodiments, the first information associated with different models may be carried in one piece of information, or may be carried in multiple pieces of information. The first information associated with the first model may be configured in more than one manner, or in more than one piece of information.

It is to be noted that the first information may be configured by one or more of the above-described manners. For example, the first information may be configured by predefinition, pre-configuration, and dynamic indication. For another example, the first information may be configured by pre-configuration, and dynamic indication.

In cases where there are multiple pieces of the first information, a priority of the first information satisfies one or more of: a priority of the first information carried in dynamic indication information sent by a second device is higher than a priority of the first information that is pre-configured; the first information that is pre-defined has a highest priority; a priority of the first information received at a second moment is higher than a priority of the first information received at a third moment, wherein a difference between a current moment and the second moment is smaller than a difference between the current moment and the third moment.

If the first information associated with the first model is configured by pre-configuration and dynamic indication, the priority of the first information carried in the dynamic indication information is higher than the priority of the first information carried in the pre-configuration information.

If the first information associated with the first model is configured by predefinition and other manners, the first information carried in the pre-defined information has the highest priority.

If the first information associated with the first model is configured in one manner and there are a plurality of pieces of first information, priorities of the first information are determined according to reception/decoding moments of the plurality of pieces of first information. For example, a priority of the first information received at a second moment is higher than a priority of the first information received at a third moment, wherein a difference between a current moment and the second moment is smaller than a difference between the current moment and the third moment. That is, the priority of the first information whose reception moment is closest to the current moment is the highest, or the priority of the first information which is most recently received or decoded is the highest.

In some embodiments, if the configuration manner of the first information includes pre-configuration and dynamic indication, then the first information is configured when the first device receives a model transmitted by the second device, or the first information is configured when a trigger condition is satisfied, wherein the trigger condition includes: reporting device status information of the first device by the first device to the second device, and/or updating of model configuration information of the second device.

Herein, if the first information is pre-configuration information, the first information may be configured (such as initially configured and/or reconfigured) when the first device receives the model transmitted by the second device; and when the first device reports the device status information of the first device to the second device, the first information may be reconfigured (or the first information may be updated); and the first information is reconfigured in response to an update of the model configuration information of the second device, such as an update of the model configuration information of the second device after a cell handover. It is to be noted that a reporting manner of the device status information of the first device includes periodic reporting, and the reporting of the device status information mentioned herein may refer to periodic reporting.

If the first information is dynamic indication information, the trigger condition for transmitting the first information includes reporting device status information of the first device by the first device to the second device. The reporting manner of the device status information of the first device may further include triggered reporting, and the reporting of the device status information mentioned herein may refer to triggered reporting. The trigger condition of the triggered reporting may include occurrence of a model parallelism conflict, that is, when the model parallelism conflict occurs, the first device reports device status information of the first device to the second device.

In some embodiments, the device status information of the first device may include one or more of: capability information of the first device, information associated with processing of the model parallelism conflict of the first device, and wireless environment information of the model.

In some embodiments, the device status information of the first device may include part or all of the information included in the first information, for example the content of any one or more of the first information mentioned above, such as model priority information, information about the model inference order, and the like.

In some embodiments, the device status information of the first device may include status information of the first model, such as whether the first model is deactivated, a time when the first model is reactivated, whether inference/training of the first model is paused, whether an inference cycle of the first model is adjusted, an inference cycle of the first model, a model backoff number of the first model (which may include a number of times that the first model pauses inference and/or a number of times that the model inference cycle is adjusted), a backoff duration of the first model, fairness information of the first model, and model identifier(s) of model(s) stored locally in the first device.

In some embodiments, the device status information of the first device may include whether the first device has capability for accelerating model inference. Whether the first device has capability for accelerating model inference may, for example, refer to whether the first device has dedicated hardware such as a Graphics Processing Unit (GPU) and/or an Application Specific Integrated Circuit (ASIC) that can be used to accelerate model inference.

In some embodiments, the device status information of the first device may include a storage space available in the first device for model inference. The storage space may, for example, refer to a running memory space of the first device. If the running memory space is larger, the first device can perform inference/training on more models, or can perform inference/training on the larger model. If part of the running memory space allocated to the model storage by the first device is occupied by the model, the remaining running memory space can be used by a new model. Thus, the storage space available in the first device for model inference includes the remaining running memory space available for model inference.

In some embodiments, the device status information of the first device may include computational power and/or remaining computational power available in the first device for model inference. Generally, the stronger the computational power of the first device, the more models that first device can perform inference/train, or the larger the models that the first device can perform inference/train.

In some embodiments, the device status information of the first device may include an amount of electricity available in the first device for model inference.

In some embodiments, the device status information of the first device may include information associated with models stored in the first device, such as an identifier (e.g., model ID) and/or a number of models stored in the first device. For example, a model identifier corresponds to a model of a specific function and is used to determine whether existing model structures can be multiplexed.

In some embodiments, the device status information of the first device may include performance requirements for the model associated with the first device, such as requiring a positioning error not exceeding 0.5 m in the positioning service. If deactivation of the first model or the replacement model of the first model fails to satisfy the performance requirements of the model, the first model may not be deactivated, or the replacement model may not be adopted in the model management.

In some embodiments, the device status information of the first device may include whether the first device supports model compression, or whether the first device supports usage of a replacement model. As mentioned above, adopting the replacement model may bring certain performance degradation. If the first device does not support model compression, or does not support usage of the replacement model, the model compression or model replacement operation may not be performed on the first model in the model management process.

In some embodiments, the device status information of the first device may include position information of the first device. As mentioned earlier, the applicable scenarios of a single model are relatively limited, so the first device may need to use different models in different positions. In this way, the management policy of the model(s) can be dynamically determined according to the position information of the first device.

The position information of the first device may be used to indicate a position of the first device, such as an absolute position (such as coordinates), a relative position (such as a relative position with a network device), and may also be used to indicate a movement state of the first device, such as indicating a movement state of the first device through a plurality of pieces of position information. For example, the position information of the first device may include one or more of: absolute position information of the first device at a first moment; relative position information of the first device at the first moment; information of one or more positions at which the first device is located within a second time window before the first moment; information of N consecutive positions at which the first device is located before the first moment; displacement information of the first device within a third time window before the first moment; and a movement speed of the first device, wherein N is a positive integer.

In some embodiments, the device status information of the first device may include data arrival information of the first device. For example, the data arrival information of the first device includes one or more of: a data amount of data arriving at a first moment; data amounts and/or arrival times of data arriving at M consecutive sampling points before the first moment; and a data amount and/or an arrival time of data arriving in a fourth time window before the first moment, wherein M is a positive integer. As a result, the first device can manage the first model based on information such as information about data to be processed or a change trend of the amount of data to be processed, thereby contributing to improving the adaptability between the model management policy and the data processing service of the first device.

In some embodiments, the device status information of the first device may include information associated with a serving cell and/or information associated with a neighbor cell. In the scenario of cell mobility management, the first device accesses a different serving cell, and the model configuration of the first device may be updated (for example, including an identifier of a model that the first device can use). In this way, the management policy of the model can be dynamically determined according to the information associated with the serving cell and/or the information associated with the neighbor cell of the first device.

Herein, the information associated with the serving cell and/or the neighbor cell may include a cell identifier, and/or a signal quality of the cell. The cell identifier may include, for example, a Physical Cell ID (PCI). The signal quality of the cell may include Reference Signal Receiving Power (RSRP), Reference Signal Receiving Quality (RSRQ), a Signal-to-Interference-plus-Noise Ratio (SINR), and the like.

For example, the signal quality of the cell includes one or more of: a signal quality at a first moment; signal qualities at P consecutive sampling points before the first moment; and a signal quality within a first time window before the first moment, wherein P is a positive integer.

In some embodiments, the device status information of the first device may include information related to a Buffer Status Report (BSR) of the first device. For example, the information related to the BSR of the first device includes one or more of: a BSR at a first moment; BSRs at R consecutive sampling points before the first moment; and a BSR within a fifth time window before the first moment, wherein R is a positive integer.

It is to be noted that the first moment mentioned above may be a current moment and/or a historical moment. For example, the fact that the position information of the first device includes absolute position information of the first device at the first moment may mean that the position information of the first device includes absolute position information of the first device at the current moment and/or the historical moment. As another example, the fact that the signal quality of the cell includes the signal quality at the first moment may mean that the signal quality of the cell includes the signal quality of the cell at the current moment and/or the signal quality of the cell at the historical moment.

It is to be noted that the method provided by the embodiment of the disclosure can be applied to model management of the first device, such as model management when a model parallelism conflict occurs in the first device. For example, in response to a model parallelism conflict of the first device, the first device manages the first model based on the first information.

The methods for wireless communication provided by the embodiments of the disclosure have good backward compatibility and a wide range of application scenarios. With the evolution of technologies, the resources of the first device required by the model may become increasingly larger, and the hardware capability of the old terminal device may become more stretched. The methods provided by the embodiments of the disclosure can make the old terminal device or the device with lower capability still have the possibility of applying multiple models. In addition, the methods provided by the embodiments of the disclosure can enable various existing devices to run a plurality of models, and has a huge potential user group and market.

It is to be noted that the inference/training of the model mentioned in the embodiments of the disclosure may refer to the inference of the model and/or the training of the model.

Embodiments of the method of the disclosure are described in detail above with reference to FIG. 1 to FIG. 5, and embodiments of the device of the disclosure are described in detail below with reference to FIG. 6 to FIG. 8. It is to be understood that the description of the method embodiments and the description of the device embodiments correspond to each other, and therefore, for the portions not described in detail, reference can be made to the foregoing method embodiments.

FIG. 6 is a schematic diagram of a wireless communication device according to an embodiment of the disclosure, and the device 600 may be the first device described above.

Referring to FIG. 6, the device 600 may include an acquiring unit 610 and a managing unit 620.

The acquiring unit 610 is configured to acquire first information used for managing models associated with the first device, the models associated with the first device including a first model.

The managing unit 620 is configured to manage the first model based on the first information.

In some embodiments, the first information includes one or more of: second information for indicating a model identifier; third information associated with a model priority; fourth information associated with a pause of model inference/training and/or adjustment of a model inference cycle; fifth information associated with model deactivation; sixth information for indicating a model inference order; seventh information for indicating a gain in communication performance of communication based on a model as compared to communication not using the model; eighth information for indicating a model required by the first device for inference/training; and ninth information associated with a replacement model, the replacement model being related to the first model.

In some embodiments, the third information includes one or more of: information on whether configuration of the model priority is supported; information on whether a priority processing function is enabled; and model priority information.

In some embodiments, the model priority information is related to the second information and/or a service type associated with the model.

In some embodiments, the fourth information includes one or more of:
a maximum number of times for indicating a maximum value of a model inference/training backoff number, the model inference/training backoff number being a number of times of pausing model inference/training and/or adjusting the model inference cycle; a first duration for indicating a backoff duration of model inference and/or training, the backoff duration being a duration during which model inference/training is paused and/or the model inference cycle is adjusted; information about the model inference cycle; and information associated with a model fairness.

In some embodiments, the managing unit is configured to: if the model inference/training backoff number of the first model is greater than or equal to the maximum number of times, deactivate, by the first device, the first model.

In some embodiments, the first duration is related to the model inference/training backoff number.

In some embodiment, the information about the model inference cycle includes a first cycle and/or a second cycle, the first cycle is applied to a model inference process when resources of the first device are sufficient, and the second cycle is applied to a model inference process when the resources of the first device are insufficient, wherein the first cycle is different from the second cycle.

In some embodiments, the information associated with the fairness of the model includes one or more of: information for indicating an initial value of the model fairness; information for indicating an increment of the model fairness; and information for indicating a termination condition of the model fairness.

In some embodiments, the managing unit is configured to: if the model fairness of the first model satisfies the termination condition, perform, by the first device, inference/training of the first model or deactivate the first model.

In some embodiments, the model fairness is determined based on the initial value of the model fairness and the increment of the model fairness.

In some embodiments, the increment of the model fairness is associated with the model inference/training backoff number, wherein the model inference/training backoff number is a number of times of pausing model inference/training and/or adjusting the model inference cycle.

In some embodiments, the initial value of the model fairness is determined based on model priority information.

In some embodiments, the fifth information includes one or more of: information on whether model deactivation is supported; a second duration for indicating a deactivation duration of the model; and a first timer for indicating a moment when the model is deactivated.

In some embodiments, the sixth information is used for indicating an inference order relationship of a plurality of models, wherein the plurality of models are models requiring serial processing.

In some embodiments, the plurality of models include the first model and a second model, and if an inference result of the first model is used as an input to the second model, the sixth information is used for indicating that inference is performed on the first model before inference is performed on the second model.

In some embodiments, the managing unit is configured to: if the model required by the first device for inference/training includes the first model, not deactivate, by the first device, the first model or not pause inference/training of the first model, and/or not adjust, by the first device, the inference cycle of the first model.

In some embodiments, the ninth information includes one or more of: information on whether usage of the replacement model is supported; model information of the replacement model; an acquisition manner of the replacement model; and a usage timing of the replacement model.

In some embodiments, acquiring, by the first device, the first information includes one or more of following manners: acquiring the first information that is pre-defined; acquiring the first information that is pre-configured; and acquiring dynamic indication information sent by a second device, wherein the dynamic indication information includes the first information.

In some embodiments, the first information is configured when the first device receives a model transmitted by the second device, or the first information is configured when a trigger condition is satisfied, wherein the trigger condition includes: reporting device status information of the first device by the first device to the second device, and/or updating of model configuration information of the second device.

In some embodiments, the device status information of the first device includes one or more of: part or all of the first information; status information of the first model; whether the first device has capability for accelerating model inference; a storage space available in the first device for model inference; computational power available in the first device for model inference; an amount of electricity available in the first device for model inference; information associated with a model stored in the first device; a performance requirement of a model associated with the first device; whether the first device supports model compression; position information of the first device; data arrival information of the first device; information associated with a serving cell; information associated with a neighbor cell; and information related to a Buffer Status Report (BSR) of the first device.

In some embodiments, the position information of the first device includes one or more of: absolute position information of the first device at a first moment; relative position information of the first device at the first moment; information of one or more positions at which the first device is located within a second time window before the first moment; information of N consecutive positions at which the first device is located before the first moment; displacement information of the first device within a third time window before the first moment; and a movement speed of the first device, wherein N is a positive integer.

In some embodiments, the data arrival information of the first device includes one or more of: a data amount of data arriving at a first moment; data amounts and/or arrival times of data arriving at M consecutive sampling points before the first moment; and a data amount and/or an arrival time of data arriving in a fourth time window before the first moment, wherein M is a positive integer.

In some embodiments, the information associated with the serving cell and/or the neighboring cell includes a cell identifier, and/or a signal quality of the cell.

In some embodiments, the signal quality of the cell includes one or more of:
a signal quality at a first moment; signal qualities at P consecutive sampling points before the first moment; and a signal quality within a first time window before the first moment, wherein P is a positive integer.

In some embodiments, the information related to the BSR of the first device includes one or more of: a BSR at a first moment; BSRs at R consecutive sampling points before the first moment; and a BSR within a fifth time window before the first moment, wherein R is a positive integer.

In some embodiments, the first moment is a current moment and/or a historical moment.

In some embodiments, a reporting manner of the device status information of the first device includes periodic reporting and/or triggered reporting, wherein a trigger condition of the triggered reporting includes occurrence of a model parallelism conflict.

In some embodiments, a priority of the first information satisfies one or more of: a priority of the first information carried in dynamic indication information sent by a second device is higher than a priority of the first information that is pre-configured; the first information that is pre-defined has a highest priority; a priority of the first information received at a second moment is higher than a priority of the first information received at a third moment, wherein a difference between a current moment and the second moment is smaller than a difference between the current moment and the third moment.

In some embodiments, the managing unit is configured to: in response to a model parallelism conflict of the first device, manage, by the first device, the first model based on the first information.

FIG. 7 is a schematic diagram of a wireless communication device according to an embodiment of the disclosure, and the device 700 may be the second device described above.

Referring to FIG. 7, the device 700 may include a sending unit 710.

The sending unit 710 is configured to send first information to a first device, the first information being used for managing models associated with the first device, and the models associated with the first device including a first model.

In some embodiments, the first information includes one or more of: second information for indicating a model identifier; third information associated with a model priority; fourth information associated with a pause of model inference/training and/or adjustment of a model inference cycle; fifth information associated with model deactivation; sixth information for indicating a model inference order; seventh information for indicating a gain in communication performance of communication based on a model as compared to communication not using the model; eighth information for indicating a model required by the first device for inference/training; and ninth information associated with a replacement model, the replacement model being related to the first model.

In some embodiments, the third information includes one or more of: information on whether configuration of the model priority is supported; information on whether a priority processing function is enabled; and model priority information.

In some embodiments, the model priority information is related to the second information and/or a service type associated with the model.

In some embodiments, the fourth information includes one or more of:
a maximum number of times for indicating a maximum value of a model inference/training backoff number, the model inference/training backoff number being a number of times of pausing model inference/training and/or adjusting the model inference cycle; a first duration for indicating a backoff duration of model inference and/or training, the backoff duration being a duration during which model inference/training is paused and/or the model inference cycle is adjusted; information about the model inference cycle; and information associated with a model fairness.

In some embodiments, the first duration is related to the model inference/training backoff number.

In some embodiment, the information about the model inference cycle includes a first cycle and/or a second cycle, the first cycle is applied to a model inference process when resources of the first device are sufficient, and the second cycle is applied to a model inference process when the resources of the first device are insufficient, wherein the first cycle is different from the second cycle.

In some embodiments, the information associated with the fairness of the model includes one or more of: information for indicating an initial value of the model fairness; information for indicating an increment of the model fairness; and information for indicating a termination condition of the model fairness.

In some embodiments, the model fairness is determined based on the initial value of the model fairness and the increment of the model fairness.

In some embodiments, the increment of the model fairness is associated with the model inference/training backoff number, wherein the model inference/training backoff number is a number of times of pausing model inference/training and/or adjusting the model inference cycle.

In some embodiments, the initial value of the model fairness is determined based on model priority information.

In some embodiments, the fifth information includes one or more of: information on whether model deactivation is supported; a second duration for indicating a deactivation duration of the model; and a first timer for indicating a moment when the model is deactivated.

In some embodiments, the sixth information is used for indicating an inference order relationship of a plurality of models, wherein the plurality of models are models requiring serial processing.

In some embodiments, the plurality of models include the first model and a second model, and if an inference result of the first model is used as an input to the second model, the sixth information is used for indicating that inference is performed on the first model before inference is performed on the second model.

In some embodiments, the seventh information is used for indicating a gain in communication performance of communication based on a model as compared to communication not using the model.

In some embodiments, the ninth information includes one or more of: information on whether usage of the replacement model is supported; model information of the replacement model; an acquisition manner of the replacement model; and a usage timing of the replacement model.

In some embodiments, the first information is configured when the first device receives a model transmitted by the second device, or the first information is configured when a trigger condition is satisfied, wherein the trigger condition includes: reporting device status information of the first device by the first device to the second device, and/or updating of model configuration information of the second device.

In some embodiments, the device status information of the first device includes one or more of: part or all of the first information; status information of the first model; whether the first device has capability for accelerating model inference; a storage space available in the first device for model inference; computational power available in the first device for model inference; an amount of electricity available in the first device for model inference; information associated with a model stored in the first device; a performance requirement of a model associated with the first device; whether the first device supports model compression; position information of the first device; data arrival information of the first device; information associated with a serving cell; information associated with a neighbor cell; and information related to a Buffer Status Report (BSR) of the first device.

In some embodiments, the position information of the first device includes one or more of: absolute position information of the first device at a first moment; relative position information of the first device at the first moment; information of one or more positions at which the first device is located within a second time window before the first moment; information of N consecutive positions at which the first device is located before the first moment; displacement information of the first device within a third time window before the first moment; and a movement speed of the first device, wherein N is a positive integer.

In some embodiments, the data arrival information of the first device includes one or more of: a data amount of data arriving at a first moment; data amounts and/or arrival times of data arriving at M consecutive sampling points before the first moment; and a data amount and/or an arrival time of data arriving in a fourth time window before the first moment, wherein M is a positive integer.

In some embodiments, the information associated with the serving cell and/or the neighboring cell includes a cell identifier, and/or a signal quality of the cell.

In some embodiments, the signal quality of the cell includes one or more of:
a signal quality at a first moment; signal qualities at P consecutive sampling points before the first moment; and a signal quality within a first time window before the first moment, wherein P is a positive integer.

In some embodiments, the information related to the BSR of the first device includes one or more of: a BSR at a first moment; BSRs at R consecutive sampling points before the first moment; and a BSR within a fifth time window before the first moment, wherein R is a positive integer.

In some embodiments, the first moment is a current moment and/or a historical moment.

In some embodiments, a reporting manner of the device status information of the first device includes periodic reporting and/or triggered reporting, wherein a trigger condition of the triggered reporting includes occurrence of a model parallelism conflict.

In some embodiments, a priority of the first information satisfies one or more of: a priority of the first information carried in dynamic indication information sent by a second device is higher than a priority of the first information that is pre-configured; the first information that is pre-defined has a highest priority; a priority of the first information received at a second moment is higher than a priority of the first information received at a third moment, wherein a difference between a current moment and the second moment is smaller than a difference between the current moment and the third moment.

In an optional embodiment, the sending unit and the receiving unit described above may be a transceiver 830. The devices 600 and 700 may also include a processor 810 and a memory 820, as specifically shown in FIG. 8.

FIG. 8 is a schematic structural diagram of a communication apparatus according to an embodiment of the disclosure. The dashed line in FIG. 8 indicates that the unit or module is optional. The apparatus 800 may be used to implement the method described in the method embodiments above. The apparatus 800 may be a chip, a first device, or a second device.

The apparatus 800 may include one or more processors 810. The processor 810 may support the apparatus 800 to implement the methods described in the method embodiments above. The processor 810 may be a general-purpose processor or a special-purpose processor. For example, the processor may be a Central Processing Unit (CPU). Alternatively, the processor may also be another general purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, or the like. The general-purpose processor may be a microprocessor, or the processor may be any conventional processor or the like.

The apparatus 800 may also include one or more memories 820. The memory 820 has stored therein a program that can be executed by the processor 810 to cause the processor 810 to perform the method described in the method embodiments above. The memory 820 may be independent of the processor 810 or may be integrated in the processor 810.

The apparatus 800 may also include a transceiver 830. The processor 810 may communicate with other devices or chips through the transceiver 830. For example, the processor 810 may send or receive data to or from other device(s) or chip(s) through the transceiver 830.

An embodiment of the disclosure further provides a computer-readable storage medium for storing a program. The computer-readable storage medium can be applied to the first device or the second device provided by the embodiment of the disclosure, and the program causes the computer to perform the method performed by the wireless communication device in the respective embodiments of the disclosure.

An embodiment of the disclosure further provides a computer program product. The computer program product includes a program. The computer program product can be applied to the first device or the second device provided by the embodiment of the disclosure, and the program causes the computer to perform the method performed by the wireless communication device in the respective embodiments of the disclosure.

An embodiment of the disclosure further provides a computer program. The computer program can be applied to the wireless communication device provided by the embodiment of the disclosure, and the computer program causes the computer to perform the method performed by the wireless communication device in the respective embodiments of the disclosure.

It is to be understood that the terms "system" and "network" are often used interchangeably herein. In addition, the terms used in the embodiments of the present disclosure are used only for explanation of specific embodiments of the present disclosure, and the terms are not intended to limit the present disclosure. The terms "first", "second", "third", "fourth" and the like in the description and claims of the present disclosure and the accompanying drawings are used for distinguishing different objects and are not used for describing a particular sequence. Furthermore, the terms "including" and "having" and any variations thereof are intended to cover non-exclusive inclusion.

The "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the embodiments of the present disclosure, the expression "B corresponding to A" means that B is associated with A, and B may be determined based on A. However, it is also to be understood that determining B based on A does not mean that B is determined based on A alone, but that B may also be determined based on A and/or other information.

In the embodiments of the present disclosure, the term "correspond" may mean that there is a direct correspondence or an indirect correspondence between two items, may also mean that there is an association relationship between the two items, and may also be a relationship such as indication and being indicated, configuration and being configured, etc.

In the embodiments of the present disclosure, the "pre-defined" or "pre-configured" may be achieved by pre-storing corresponding codes, tables or other means used for indicating relevant information in devices (e.g., including terminal devices and network devices), and the specific implementation thereof is not limited in the present disclosure. For example, "pre-defined" may refer to what is defined in a protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In the embodiments of the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

In various embodiments of the present disclosure, sizes of serial numbers of the above processes do not mean a sequence of execution, and the sequence of execution of each process should be determined by its function and internal logic, and should not constitute any limitation on implementation processes of the embodiments of the disclosure.

In the several embodiments provided in the present disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some features may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

The embodiments described above may be implemented in whole or in part by software, hardware, firmware, or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general-purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, digital subscriber line (DSL)) manner or a wireless (e.g., infrared, wireless, microwave, etc.) manner. The computer-readable storage medium may be any available medium that a computer may access or may be a data storage device such as a server, a data center, or the like that is integrated with one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

What described above are only the specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for wireless communication, comprising:
acquiring, by a first device, first information used for managing models associated with the first device, the models associated with the first device comprising a first model; and
managing, by the first device, the first model based on the first information.

2. The method of claim 1, wherein the first information comprises one or more of:
second information for indicating a model identifier;
third information associated with a model priority;
fourth information associated with a pause of model inference/training and/or adjustment of a model inference cycle;
fifth information associated with model deactivation;
sixth information for indicating a model inference order;
seventh information for indicating a gain in communication performance of communication based on a model as compared to communication not using the model;
eighth information for indicating a model required by the first device for inference/training; and
ninth information associated with a replacement model, the replacement model being related to the first model.

3. The method of claim 2, wherein the third information comprises one or more of:
information on whether configuration of the model priority is supported;
information on whether a priority processing function is enabled; and
model priority information.

4. The method of claim 3, wherein the model priority information is related to the second information and/or a service type associated with the model.

5. The method of any one of claims 2 to 4, wherein the fourth information comprises one or more of:
a maximum number of times for indicating a maximum value of a model inference/training backoff number, the model inference/training backoff number being a number of times of pausing model inference/training and/or adjusting the model inference cycle;
a first duration for indicating a backoff duration of model inference and/or training, the backoff duration being a duration during which model inference/training is paused and/or the model inference cycle is adjusted;
information about the model inference cycle; and
information associated with a model fairness.

6. The method of claim 5, wherein managing, by the first device, the first model based on the first information comprises:
if the model inference/training backoff number of the first model is greater than or equal to the maximum number of times, deactivating, by the first device, the first model.

7. The method of claim 5 or 6, wherein the first duration is related to the model inference/training backoff number.

8. The method of any one of claims 5 to 7, wherein the information about the model inference cycle comprises a first cycle and/or a second cycle, the first cycle is applied to a model inference process when resources of the first device are sufficient, and the second cycle is applied to a model inference process when the resources of the first device are insufficient, wherein the first cycle is different from the second cycle.

9. The method of any one of claims 5 to 8, wherein the information associated with the fairness of the model comprises one or more of:
information for indicating an initial value of the model fairness;
information for indicating an increment of the model fairness; and
information for indicating a termination condition of the model fairness.

10. The method of claim 9, wherein managing, by the first device, the first model based on the first information comprises:
if the model fairness of the first model satisfies the termination condition, performing, by the first device, inference/training of the first model or deactivating the first model.

11. The method of claim 9 or 10, wherein the model fairness is determined based on the initial value of the model fairness and the increment of the model fairness.

12. The method of any one of claims 9 to 11, wherein the increment of the model fairness is associated with the model inference/training backoff number, wherein the model inference/training backoff number is a number of times of pausing model inference/training and/or adjusting the model inference cycle.

13. The method of any one of claims 9 to 12, wherein the initial value of the model fairness is determined based on model priority information.

14. The method of any one of claims 2 to 13, wherein the fifth information comprises one or more of:
information on whether model deactivation is supported;
a second duration for indicating a deactivation duration of the model; and
a first timer for indicating a moment when the model is deactivated.

15. The method of any one of claims 2 to 14, wherein the sixth information is used for indicating an inference order relationship of a plurality of models, wherein the plurality of models are models requiring serial processing.

16. The method of claim 15, wherein the plurality of models comprise the first model and a second model, and if an inference result of the first model is used as an input to the second model, the sixth information is used for indicating that inference is performed on the first model before inference is performed on the second model.

17. The method of claim any one of claims 2 to 16, wherein managing, by the first device, the first model based on the first information comprises:
if the model required by the first device for inference/training comprises the first model, not deactivating, by the first device, the first model or not pausing inference/training of the first model, and/or not adjusting, by the first device, the inference cycle of the first model.

18. The method of any one of claims 2 to 17, wherein the ninth information comprises one or more of:
information on whether usage of the replacement model is supported;
model information of the replacement model;
an acquisition manner of the replacement model; and
a usage timing of the replacement model.

19. The method of any one of claims 1 to 18, wherein acquiring, by the first device, the first information comprises one or more of following manners:
acquiring the first information that is pre-defined;
acquiring the first information that is pre-configured; and
acquiring dynamic indication information sent by a second device, wherein the dynamic indication information comprises the first information.

20. The method of claim 19, wherein the first information is configured when the first device receives a model transmitted by the second device, or the first information is configured when a trigger condition is satisfied,
wherein the trigger condition comprises: reporting device status information of the first device by the first device to the second device, and/or updating of model configuration information of the second device.

21. The method of claim 20, wherein the device status information of the first device comprises one or more of:
part or all of the first information;
status information of the first model;
whether the first device has capability for accelerating model inference;
a storage space available in the first device for model inference;
computational power available in the first device for model inference;
an amount of electricity available in the first device for model inference;
information associated with a model stored in the first device;
a performance requirement of a model associated with the first device;
whether the first device supports model compression;
position information of the first device;
data arrival information of the first device;
information associated with a serving cell;
information associated with a neighbor cell; and
information related to a Buffer Status Report (BSR) of the first device.

22. The method of claim 21, wherein the information associated with the serving cell and/or the neighboring cell comprises a cell identifier, and/or a signal quality of the cell.

23. The method of claim 22, wherein the signal quality of the cell comprises one or more of:
a signal quality at a first moment;
signal qualities at P consecutive sampling points before the first moment; and
a signal quality within a first time window before the first moment,
wherein P is a positive integer.

24. The method of any one of claims 21 to 23, wherein the position information of the first device comprises one or more of:
absolute position information of the first device at a first moment;
relative position information of the first device at the first moment;
information of one or more positions at which the first device is located within a second time window before the first moment;
information of N consecutive positions at which the first device is located before the first moment;
displacement information of the first device within a third time window before the first moment; and
a movement speed of the first device,
wherein N is a positive integer.

25. The method of any one of claims 21 to 24, wherein the data arrival information of the first device comprises one or more of:
a data amount of data arriving at a first moment;
data amounts and/or arrival times of data arriving at M consecutive sampling points before the first moment; and
a data amount and/or an arrival time of data arriving in a fourth time window before the first moment,
wherein M is a positive integer.

26. The method of any one of claims 21 to 25, wherein the information related to the BSR of the first device comprises one or more of:
a BSR at a first moment;
BSRs at R consecutive sampling points before the first moment; and
a BSR within a fifth time window before the first moment,
wherein R is a positive integer.

27. The method of any one of claims 23 to 26, wherein the first moment is a current moment and/or a historical moment.

28. The method of any one of claims 20 to 27, wherein a reporting manner of the device status information of the first device comprises periodic reporting and/or triggered reporting, wherein a trigger condition of the triggered reporting comprises occurrence of a model parallelism conflict.

29. The method of any one of claims 1 to 28, wherein a priority of the first information satisfies one or more of:
a priority of the first information carried in dynamic indication information sent by a second device is higher than a priority of the first information that is pre-configured;
the first information that is pre-defined has a highest priority;
a priority of the first information received at a second moment is higher than a priority of the first information received at a third moment,
wherein a difference between a current moment and the second moment is smaller than a difference between the current moment and the third moment.

30. The method of claim any one of claims 1 to 29, wherein managing, by the first device, the first model based on the first information comprises:
in response to a model parallelism conflict of the first device, managing, by the first device, the first model based on the first information.

31. A method for wireless communication, comprising:
sending, by a second device, first information to a first device, the first information being used for managing models associated with the first device, and the models associated with the first device comprising a first model.

32. The method of claim 31, wherein the first information comprises one or more of:
second information for indicating a model identifier;
third information associated with a model priority;
fourth information associated with a pause of model inference/training and/or adjustment of a model inference cycle;
fifth information associated with model deactivation;
sixth information for indicating a model inference order;
seventh information for indicating a gain in communication performance of communication based on a model as compared to communication not using the model;
eighth information for indicating a model required by the first device for inference/training; and
ninth information associated with a replacement model, the replacement model being related to the first model.

33. The method of claim 32, wherein the third information comprises one or more of:
information on whether configuration of the model priority is supported;
information on whether a priority processing function is enabled; and
model priority information.

34. The method of claim 33, wherein the model priority information is related to the second information and/or a service type associated with the model.

35. The method of any one of claims 32 to 34, wherein the fourth information comprises one or more of:
a maximum number of times for indicating a maximum value of a model inference/training backoff number, the model inference/training backoff number being a number of times of pausing model inference/training and/or adjusting the model inference cycle;
a first duration for indicating a backoff duration of model inference and/or training, the backoff duration being a duration during which model inference/training is paused and/or the model inference cycle is adjusted;
information about the model inference cycle; and
information associated with a model fairness.

36. The method of claim 35, wherein the first duration is related to the model inference/training backoff number.

37. The method of claim 35 or 36, wherein the information about the model inference cycle comprises a first cycle and/or a second cycle, the first cycle is applied to a model inference process when resources of the first device are sufficient, and the second cycle is applied to a model inference process when the resources of the first device are insufficient, wherein the first cycle is different from the second cycle.

38. The method of any one of claims 35 to 37, wherein the information associated with the fairness of the model comprises one or more of:
information for indicating an initial value of the model fairness;
information for indicating an increment of the model fairness; and
information for indicating a termination condition of the model fairness.

39. The method of claim 38, wherein the model fairness is determined based on the initial value of the model fairness and the increment of the model fairness.

40. The method of claim 38 or 39, wherein the increment of the model fairness is associated with the model inference/training backoff number, wherein the model inference/training backoff number is a number of times of pausing model inference/training and/or adjusting the model inference cycle.

41. The method of any one of claims 38 to 40, wherein the initial value of the model fairness is determined based on model priority information.

42. The method of any one of claims 32 to 41, wherein the fifth information comprises one or more of:
information on whether model deactivation is supported;
a second duration for indicating a deactivation duration of the model; and
a first timer for indicating a moment when the model is deactivated.

43. The method of any one of claims 32 to 42, wherein the sixth information is used for indicating an inference order relationship of a plurality of models, wherein the plurality of models are models requiring serial processing.

44. The method of claim 43, wherein the plurality of models comprise the first model and a second model, and if an inference result of the first model is used as an input to the second model, the sixth information is used for indicating that inference is performed on the first model before inference is performed on the second model.

45. The method of any one of claims 32 to 44, wherein the ninth information comprises one or more of:
information on whether usage of the replacement model is supported;
model information of the replacement model;
an acquisition manner of the replacement model; and
a usage timing of the replacement model.

46. The method of any one of claims 31 to 45, wherein the first information is configured when the first device receives a model transmitted by the second device, or the first information is configured when a trigger condition is satisfied,
wherein the trigger condition comprises: reporting device status information of the first device by the first device to the second device, and/or updating of model configuration information of the second device.

47. The method of claim 46, wherein the device status information of the first device comprises one or more of:
part or all of the first information;
status information of the first model;
whether the first device has capability for accelerating model inference;
a storage space available in the first device for model inference;
computational power available in the first device for model inference;
an amount of electricity available in the first device for model inference;
information associated with a model stored in the first device;
a performance requirement of a model associated with the first device;
whether the first device supports model compression;
position information of the first device;
data arrival information of the first device;
information associated with a serving cell;
information associated with a neighbor cell; and
information related to a Buffer Status Report (BSR) of the first device.

48. The method of claim 47, wherein the information associated with the serving cell and/or the neighboring cell comprises a cell identifier, and/or a signal quality of the cell.

49. The method of claim 48, wherein the signal quality of the cell comprises one or more of:
a signal quality at a first moment;
signal qualities at P consecutive sampling points before the first moment; and
a signal quality within a first time window before the first moment,
wherein P is a positive integer.

50. The method of any one of claims 47 to 49, wherein the position information of the first device comprises one or more of:
absolute position information of the first device at a first moment;
relative position information of the first device at the first moment;
information of one or more positions at which the first device is located within a second time window before the first moment;
information of N consecutive positions at which the first device is located before the first moment;
displacement information of the first device within a third time window before the first moment; and
a movement speed of the first device,
wherein N is a positive integer.

51. The method of any one of claims 47 to 50, wherein the data arrival information of the first device comprises one or more of:
a data amount of data arriving at a first moment;
data amounts and/or arrival times of data arriving at M consecutive sampling points before the first moment; and
a data amount and/or an arrival time of data arriving in a fourth time window before the first moment,
wherein M is a positive integer.

52. The method of any one of claims 47 to 51, wherein the information related to the BSR of the first device comprises one or more of:
a BSR at a first moment;
BSRs at R consecutive sampling points before the first moment; and
a BSR within a fifth time window before the first moment,
wherein R is a positive integer.

53. The method of any one of claims 49 to 52, wherein the first moment is a current moment and/or a historical moment.

54. The method of any one of claims 46 to 53, wherein a reporting manner of the device status information of the first device comprises periodic reporting and/or triggered reporting, wherein a trigger condition of the triggered reporting comprises occurrence of a model parallelism conflict.

55. The method of any one of claims 31 to 54, wherein a priority of the first information satisfies one or more of:
a priority of the first information carried in dynamic indication information sent by a second device is higher than a priority of the first information that is pre-configured;
the first information that is pre-defined has a highest priority;
a priority of the first information received at a second moment is higher than a priority of the first information received at a third moment,
wherein a difference between a current moment and the second moment is smaller than a difference between the current moment and the third moment.

56. A wireless communication device, which is a first device, comprising:
an acquiring unit, configured to acquire first information used for managing models associated with the first device, the models associated with the first device comprising a first model; and
a managing unit, configured to manage the first model based on the first information.

57. The device of claim 56, wherein the first information comprises one or more of:
second information for indicating a model identifier;
third information associated with a model priority;
fourth information associated with a pause of model inference/training and/or adjustment of a model inference cycle;
fifth information associated with model deactivation;
sixth information for indicating a model inference order;
seventh information for indicating a gain in communication performance of communication based on a model as compared to communication not using the model;
eighth information for indicating a model required by the first device for inference/training; and
ninth information associated with a replacement model, the replacement model being related to the first model.

58. The device of claim 57, wherein the third information comprises one or more of:
information on whether configuration of the model priority is supported;
information on whether a priority processing function is enabled; and
model priority information.

59. The device of claim 58, wherein the model priority information is related to the second information and/or a service type associated with the model.

60. The device of any one of claims 57 to 59, wherein the fourth information comprises one or more of:
a maximum number of times for indicating a maximum value of a model inference/training backoff number, the model inference/training backoff number being a number of times of pausing model inference/training and/or adjusting the model inference cycle;
a first duration for indicating a backoff duration of model inference and/or training, the backoff duration being a duration during which model inference/training is paused and/or the model inference cycle is adjusted;
information about the model inference cycle; and
information associated with a model fairness.

61. The device of claim 60, wherein the managing unit is configured to:
if the model inference/training backoff number of the first model is greater than or equal to the maximum number of times, deactivate, by the first device, the first model.

62. The device of claim 60 or 61, wherein the first duration is related to the model inference/training backoff number.

63. The device of any one of claims 60 to 62, wherein the information about the model inference cycle comprises a first cycle and/or a second cycle, the first cycle is applied to a model inference process when resources of the first device are sufficient, and the second cycle is applied to a model inference process when the resources of the first device are insufficient, wherein the first cycle is different from the second cycle.

64. The device of any one of claims 60 to 63, wherein the information associated with the fairness of the model comprises one or more of:
information for indicating an initial value of the model fairness;
information for indicating an increment of the model fairness; and
information for indicating a termination condition of the model fairness.

65. The device of claim 64, wherein the managing unit is configured to:
if the model fairness of the first model satisfies the termination condition, perform, by the first device, inference/training of the first model or deactivate the first model.

66. The device of claim 64 or 65, wherein the model fairness is determined based on the initial value of the model fairness and the increment of the model fairness.

67. The device of any one of claims 64 to 65, wherein the increment of the model fairness is associated with the model inference/training backoff number, wherein the model inference/training backoff number is a number of times of pausing model inference/training and/or adjusting the model inference cycle.

68. The device of any one of claims 64 to 67, wherein the initial value of the model fairness is determined based on model priority information.

69. The device of any one of claims 57 to 68, wherein the fifth information comprises one or more of:
information on whether model deactivation is supported;
a second duration for indicating a deactivation duration of the model; and
a first timer for indicating a moment when the model is deactivated.

70. The device of any one of claims 57 to 69, wherein the sixth information is used for indicating an inference order relationship of a plurality of models, wherein the plurality of models are models requiring serial processing.

71. The device of claim 70, wherein the plurality of models comprise the first model and a second model, and if an inference result of the first model is used as an input to the second model, the sixth information is used for indicating that inference is performed on the first model before inference is performed on the second model.

72. The device of any one of claims 57 to 71, wherein the managing unit is configured to:
if the model required by the first device for inference/training comprises the first model, not deactivate, by the first device, the first model or not pause inference/training of the first model, and/or not adjust, by the first device, the inference cycle of the first model.

73. The device of any one of claims 57 to 72, wherein the ninth information comprises one or more of:
information on whether usage of the replacement model is supported;
model information of the replacement model;
an acquisition manner of the replacement model; and
a usage timing of the replacement model.

74. The device of any one of claims 56 to 73, wherein acquiring, by the first device, the first information comprises one or more of following manners:
acquiring the first information that is pre-defined;
acquiring the first information that is pre-configured; and
acquiring dynamic indication information sent by a second device, wherein the dynamic indication information comprises the first information.

75. The device of claim 74, wherein the first information is configured when the first device receives a model transmitted by the second device, or the first information is configured when a trigger condition is satisfied,
wherein the trigger condition comprises: reporting device status information of the first device by the first device to the second device, and/or updating of model configuration information of the second device.

76. The device of claim 75, wherein the device status information of the first device comprises one or more of:
part or all of the first information;
status information of the first model;
whether the first device has capability for accelerating model inference;
a storage space available in the first device for model inference;
computational power available in the first device for model inference;
an amount of electricity available in the first device for model inference;
information associated with a model stored in the first device;
a performance requirement of a model associated with the first device;
whether the first device supports model compression;
position information of the first device;
data arrival information of the first device;
information associated with a serving cell;
information associated with a neighbor cell; and
information related to a Buffer Status Report (BSR) of the first device.

77. The device of claim 76, wherein the information associated with the serving cell and/or the neighboring cell comprises a cell identifier, and/or a signal quality of the cell.

78. The device of claim 77, wherein the signal quality of the cell comprises one or more of:
a signal quality at a first moment;
signal qualities at P consecutive sampling points before the first moment; and
a signal quality within a first time window before the first moment,
wherein P is a positive integer.

79. The device of any one of claims 76 to 78, wherein the position information of the first device comprises one or more of:
absolute position information of the first device at a first moment;
relative position information of the first device at the first moment;
information of one or more positions at which the first device is located within a second time window before the first moment;
information of N consecutive positions at which the first device is located before the first moment;
displacement information of the first device within a third time window before the first moment; and
a movement speed of the first device,
wherein N is a positive integer.

80. The device of any one of claims 76 to 79, wherein the data arrival information of the first device comprises one or more of:
a data amount of data arriving at a first moment;
data amounts and/or arrival times of data arriving at M consecutive sampling points before the first moment; and
a data amount and/or an arrival time of data arriving in a fourth time window before the first moment,
wherein M is a positive integer.

81. The device of any one of claims 76 to 80, wherein the information related to the BSR of the first device comprises one or more of:
a BSR at a first moment;
BSRs at R consecutive sampling points before the first moment; and
a BSR within a fifth time window before the first moment,
wherein R is a positive integer.

82. The device of any one of claims 78 to 81, wherein the first moment is a current moment and/or a historical moment.

83. The device of any one of claims 75 to 82, wherein a reporting manner of the device status information of the first device comprises periodic reporting and/or triggered reporting, wherein a trigger condition of the triggered reporting comprises occurrence of a model parallelism conflict.

84. The device of any one of claims 56 to 83, wherein a priority of the first information satisfies one or more of:
a priority of the first information carried in dynamic indication information sent by a second device is higher than a priority of the first information that is pre-configured;
the first information that is pre-defined has a highest priority;
a priority of the first information received at a second moment is higher than a priority of the first information received at a third moment,
wherein a difference between a current moment and the second moment is smaller than a difference between the current moment and the third moment.

85. The device of any one of claims 56 to 84, wherein the managing unit is configured to:
in response to a model parallelism conflict of the first device, manage, by the first device, the first model based on the first information.

86. A wireless communication device, which is a second device, comprising:
a sending unit, configured to send first information to a first device, the first information being used for managing models associated with the first device, and the models associated with the first device comprising a first model.

87. The device of claim 86, wherein the first information comprises one or more of:
second information for indicating a model identifier;
third information associated with a model priority;
fourth information associated with a pause of model inference/training and/or adjustment of a model inference cycle;
fifth information associated with model deactivation;
sixth information for indicating a model inference order;
seventh information for indicating a gain in communication performance of communication based on a model as compared to communication not using the model;
eighth information for indicating a model required by the first device for inference/training; and
ninth information associated with a replacement model, the replacement model being related to the first model.

88. The device of claim 87, wherein the third information comprises one or more of:
information on whether configuration of the model priority is supported;
information on whether a priority processing function is enabled; and
model priority information.

89. The device of claim 88, wherein the model priority information is related to the second information and/or a service type associated with the model.

90. The device of any one of claims 87 to 89, wherein the fourth information comprises one or more of:
a maximum number of times for indicating a maximum value of a model inference/training backoff number, the model inference/training backoff number being a number of times of pausing model inference/training and/or adjusting the model inference cycle;
a first duration for indicating a backoff duration of model inference and/or training, the backoff duration being a duration during which model inference/training is paused and/or the model inference cycle is adjusted;
information about the model inference cycle; and
information associated with a model fairness.

91. The device of claim 90, wherein the first duration is related to the model inference/training backoff number.

92. The device of claim 90 or 91, wherein the information about the model inference cycle comprises a first cycle and/or a second cycle, the first cycle is applied to a model inference process when resources of the first device are sufficient, and the second cycle is applied to a model inference process when the resources of the first device are insufficient, wherein the first cycle is different from the second cycle.

93. The device of any one of claims 90 to 92, wherein the information associated with the fairness of the model comprises one or more of:
information for indicating an initial value of the model fairness;
information for indicating an increment of the model fairness; and
information for indicating a termination condition of the model fairness.

94. The device of claim 93, wherein the model fairness is determined based on the initial value of the model fairness and the increment of the model fairness.

95. The device of claim 93 or 94, wherein the increment of the model fairness is associated with the model inference/training backoff number, wherein the model inference/training backoff number is a number of times of pausing model inference/training and/or adjusting the model inference cycle.

96. The device of any one of claims 93 to 95, wherein the initial value of the model fairness is determined based on model priority information.

97. The device of any one of claims 87 to 96, wherein the fifth information comprises one or more of:
information on whether model deactivation is supported;
a second duration for indicating a deactivation duration of the model; and
a first timer for indicating a moment when the model is deactivated.

98. The device of any one of claims 87 to 97, wherein the sixth information is used for indicating an inference order relationship of a plurality of models, wherein the plurality of models are models requiring serial processing.

99. The device of claim 98, wherein the plurality of models comprise the first model and a second model, and if an inference result of the first model is used as an input to the second model, the sixth information is used for indicating that inference is performed on the first model before inference is performed on the second model.

100. The device of any one of claims 87 to 99, wherein the ninth information comprises one or more of:
information on whether usage of the replacement model is supported;
model information of the replacement model;
an acquisition manner of the replacement model; and
a usage timing of the replacement model.

101. The device of any one of claims 87 to 100, wherein the first information is configured when the first device receives a model transmitted by the second device, or the first information is configured when a trigger condition is satisfied,
wherein the trigger condition comprises: reporting device status information of the first device by the first device to the second device, and/or updating of model configuration information of the second device.

102. The device of claim 101, wherein the device status information of the first device comprises one or more of:
part or all of the first information;
status information of the first model;
whether the first device has capability for accelerating model inference;
a storage space available in the first device for model inference;
computational power available in the first device for model inference;
an amount of electricity available in the first device for model inference;
information associated with a model stored in the first device;
a performance requirement of a model associated with the first device;
whether the first device supports model compression;
position information of the first device;
data arrival information of the first device;
information associated with a serving cell;
information associated with a neighbor cell; and
information related to a Buffer Status Report (BSR) of the first device.

103. The device of claim 102, wherein the information associated with the serving cell and/or the neighboring cell comprises a cell identifier, and/or a signal quality of the cell.

104. The device of claim 103, wherein the signal quality of the cell comprises one or more of:
a signal quality at a first moment;
signal qualities at P consecutive sampling points before the first moment; and
a signal quality within a first time window before the first moment,
wherein P is a positive integer.

105. The device of any one of claims 102 to 104, wherein the position information of the first device comprises one or more of:
absolute position information of the first device at a first moment;
relative position information of the first device at the first moment;
information of one or more positions at which the first device is located within a second time window before the first moment;
information of N consecutive positions at which the first device is located before the first moment;
displacement information of the first device within a third time window before the first moment; and
a movement speed of the first device,
wherein N is a positive integer.

106. The device of any one of claims 102 to 105, wherein the data arrival information of the first device comprises one or more of:
a data amount of data arriving at a first moment;
data amounts and/or arrival times of data arriving at M consecutive sampling points before the first moment; and
a data amount and/or an arrival time of data arriving in a fourth time window before the first moment,
wherein M is a positive integer.

107. The device of any one of claims 102 to 106, wherein the information related to the BSR of the first device comprises one or more of:
a BSR at a first moment;
BSRs at R consecutive sampling points before the first moment; and
a BSR within a fifth time window before the first moment,
wherein R is a positive integer.

108. The device of any one of claims 104 to 107, wherein the first moment is a current moment and/or a historical moment.

109. The device of any one of claims 101 to 108, wherein a reporting manner of the device status information of the first device comprises periodic reporting and/or triggered reporting, wherein a trigger condition of the triggered reporting comprises occurrence of a model parallelism conflict.

110. The device of any one of claims 86 to 109, wherein a priority of the first information satisfies one or more of:
a priority of the first information carried in dynamic indication information sent by a second device is higher than a priority of the first information that is pre-configured;
the first information that is pre-defined has a highest priority;
a priority of the first information received at a second moment is higher than a priority of the first information received at a third moment,
wherein a difference between a current moment and the second moment is smaller than a difference between the current moment and the third moment.

111. A wireless communication device, comprising a memory for storing a program, and a processor for invoking the program in the memory to perform a method of any one of claims 1 to 30 or 31 to 55.

112. A wireless communication device, comprising a processor for invoking a program from a memory to perform a method of any one of claims 1 to 30 or 31 to 55.

113. A chip, comprising a processor for invoking a program from a memory to cause a device on which the chip is mounted to perform a method of any one of claims 1 to 30 or 31 to 55.

114. A computer-readable storage medium having stored thereon a program that causes a computer to perform the method of any one of claims 1 to 30 or 31 to 55.

115. A computer program product, comprising a program that causes a computer to perform the method of any one of claims 1 to 30 or 31 to 55.

116. A computer program, causing a computer to perform a method of any one of claims 1 to 30 or 31 to 55.
